(19) **Europäisches Patentamt**
**European Patent Office**
**Office européen des brevets**

(11) **EP 3 305 833 A1**

(12) **EUROPEAN PATENT APPLICATION**
published in accordance with Art. 153(4) EPC

(43) Date of publication:
**11.04.2018 Bulletin 2018/15**

(21) Application number: **16803530.1**

(22) Date of filing: **03.06.2016**

(51) Int Cl.:
*C08J 3/12* [(2006.01)]  *B27N 3/04* [(2006.01)]
*C08L 67/00* [(2006.01)]  *C08L 97/02* [(2006.01)]
*B27N 3/02* [(2006.01)]  *C08L 101/16* [(2006.01)]

(86) International application number:
**PCT/JP2016/066679**

(87) International publication number:
**WO 2016/195099 (08.12.2016 Gazette 2016/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.06.2015 JP 2015115275**

(71) Applicant: **Mitsubishi Chemical Corporation Chiyoda-ku Tokyo 100-8251 (JP)**

(72) Inventors:
• **HARAGUCHI Shuichi**
  **Yokkaichi-shi**
  **Mie 510-8530 (JP)**
• **UEDA Tadashi**
  **Yokkaichi-shi**
  **Mie 510-8530 (JP)**

(74) Representative: **Vossius & Partner Patentanwälte Rechtsanwälte mbB Siebertstrasse 3 81675 München (DE)**

(54) **ALIPHATIC POLYESTER PARTICLES**

(57) The present invention provides an aliphatic polyester particle from which a wood board which is excellent in flexural strength under a dry-wet condition, low in coefficient of hygroscopic expansion, and excellent in appearance can be produced in case of use for a raw material of wood board together with a lignocellulose material and an adhesive. An aliphatic polyester particle having an average particle diameter of 650 $\mu$m or less and a value of particle diameter distribution of 1.3 or more is used as a raw material for wood board. In particular, by use in combination with a lignocellulose material and an isocyanate adhesive, the aliphatic polyester particle of the present invention has an especially excellent effect in a wood board produced.

**EP 3 305 833 A1**

**Description**

TECHNICAL FIELD

The present invention relates to an aliphatic polyester particle. In detail, the present invention relates to an aliphatic polyester particle having a specified particle diameter and particle diameter distribution.

BACKGROUND ART

Wood boards (inclusive of particle boards) produced by subjecting a mixture of a lignocellulose material, such as wood chips, fiber materials, *etc.,* and an adhesive, such as a phenol resin, a melamine resin, a urea resin, a urea-melamine condensation polymerization resin, an isocyanate resin, *etc.,* to heating and pressure molding and binding the lignocellulose material with the adhesive are light in weight and excellent in heat resistance, sound insulating properties, shear rigidity, and so on, and hence, the weed boards are used for wide-ranging applications, for example, they are used as a substrate material of a building material, such as a floor, a wall, *etc.,* or processed into furniture or the like by sticking a decorative laminated sheet onto the surface thereof.

In particular, it is known that when a building waste material or lumber from thinning is used as the lignocellulose material, the environmental load can be reduced, and the production can be achieved at low costs.

However, the wood boards using a lignocellulose material and an adhesive encountered a problem that expansion in the thickness direction is generated due to moisture in the air (the dimensional stability is worsened) and a problem that the flexural strength or peeling resistance is remarkably lowered due to water absorption.

Patent Document 1 describes that the above-described problems can be solved by producing a wood board by using, as a raw material, a mixture of bamboo chips having a specified particle diameter and an isocyanate adhesive. However, as described in the working examples of Patent Document 1 (in particular, Example 1 and Reference Example 1), only in the case of using bamboo chips having a specified particle diameter, the above-described effects are obtained. Additionally, it is described that even when wood chips in which the particle diameter is controlled in the same manner are used, sufficient effects are not obtained.

Patent Document 2 describes that a wood board was produced by using, as raw materials, a wood, an isocyanate adhesive, and poly(1,3-propylene) succinate-co-terephthalate. However, it is not described that the poly(1,3-propylene) succinate-co-terephthalate was used as a powder for the raw material of wood board.

Patent Document 3 describes that a mixture of wood chips and a polybutylene succinate resin particle having been allowed to pass through a mesh having an opening of 2 mm or a mesh having an opening of 5 mm was subjected to heating and pressurizing compression, to produce a synthetic board.

CITATION LIST

PATENT DOCUMENT

Patent Document 1: JP-A-2013-14040
Patent Document 2: US-A-2013/0324644
Patent Document 3: JP-A-2006-205644

SUMMARY OF INVENTION

TECHNICAL PROBLEM

The present inventors found that even by producing a wood board by using, as a raw material, the aliphatic polyester particle described in Patent Document 3, in addition to the problem that in the resulting wood board, expansion in the thickness direction is generated due to water absorption (the dimensional stability is worse) as well as the problem that the flexural strength or peeling resistance is remarkably lowered due to water absorption, there is involved such a problem that bleeding or coloration originated from the aliphatic polyester particle is generated on the surface appearance of the wood board at the time of heating and pressure molding.

In view of the foregoing circumstances, the present invention was made, and its object is to provide an aliphatic polyester particle from which a wood board which is excellent in flexural strength and peeling strength under a dry-wet condition, low in coefficient of hygroscopic expansion, and excellent in appearance can be produced in case of use for a raw material of wood board together with a lignocellulose material and an adhesive.

SOLUTION TO PROBLEM

In order to solve the forgoing problem, the present inventors made extensive and intensive investigations. As a result, it has been found that the foregoing problem can be solved by using an aliphatic polyester particle having specified average particle diameter and particle diameter distribution for a raw material of wood board.

Namely, summary of the present invention relates to the following [1] to [14].

[1] An aliphatic polyester particle having an average particle diameter of 650 $\mu$m or less and a value of particle size distribution of 1.3 or more.

[2] The aliphatic polyester particle according to [1], having a classified particle diameter of 1,500 $\mu$m or less.

[3] The aliphatic polyester particle according to [1] or [2], having a melting point of 200°C or lower.

[4] The aliphatic polyester particle according to any one of [1] to [3], comprising, as a main component, an aliphatic polyester resin having a diol unit and a dicarboxylic acid unit as main constituent units.

[5] The aliphatic polyester particle according to [4], wherein the aliphatic polyester resin is polybutylene succinate.

[6] The aliphatic polyester particle according to any one of [1] to [5], which is obtained by crushing an aliphatic polyester resin.

[7] The aliphatic polyester particle according to [6], which is obtained by crushing at a glass transition temperature of the aliphatic polyester resin or lower.

[8] The aliphatic polyester particle according to [6] or [7], which is obtained by crushing the aliphatic polyester resin, followed by classification.

[9] A composition comprising the aliphatic polyester particle according to any one of [1] to [8], a lignocellulose material, and an adhesive.

[10] The composition according to [9], further comprising a polysaccharide.

[11] The composition according to [9] or [10], wherein the adhesive is an organic isocyanate compound.

[12] A wood board obtained by molding the composition according to any one of [9] to [11].

[13] A composition for wood plastic composite comprising the aliphatic polyester particle according to any one of [1] to [8] and a lignocellulose material.

[14] A wood plastic material obtained by molding the composition for wood plastic composite according to [13].

EFFECT OF INVENTION

When the aliphatic polyester particle of the present invention is used for a raw material of wood board together with the lignocellulose material and the adhesive, a wood board that is excellent in flexural strength, peeling strength, resistance to hygroscopic expansion, and appearance in the dry-wet environment can be produced.

In particular, in view of the fact that the wood board produced by using, as raw materials, the aliphatic polyester particle of the present invention, the lignocellulose material, and the isocyanate adhesive is not only excellent in flexural strength, resistance to hygroscopic expansion, and appearance in the dry-wet environment but also free from formaldehyde, it is preferably used for various building materials, furniture, and so on.

DESCRIPTION OF EMBODIMENTS

Embodiments of the present invention are hereunder described in detail.

In the present invention, the mixture including an aliphatic polyester particle, a lignocellulose material, and an adhesive is referred to as "composition", and a molded article obtained by molding the forgoing composition is referred to as "wood board".

<Aliphatic polyester resin>

The aliphatic polyester resin is not particularly limited so far as it is a resin in which the molar ratio of an aliphatic structure is a maximum ratio relative to the entire structure, and for example, it may also be an aliphatic-aromatic polyester which partially has an aromatic structure in addition to the aliphatic structure. More specifically, examples thereof include an aliphatic polyester (fully aliphatic polyester) composed of, as main components, an aliphatic diol and an aliphatic dicarboxylic acid; an aliphatic polyester composed of, as a main component, an oxycarboxylic acid (hydroxycarboxylic acid); an aliphatic-aromatic polyester composed of, as main components, an aliphatic diol, an aliphatic dicarboxylic acid, and an aromatic dicarboxylic acid; and mixtures thereof. Of these, an aliphatic polyester composed of, as main components, an aliphatic diol and an aliphatic dicarboxylic acid is preferred.

The terms "composed of, as a main component(s)" as referred to herein mean an aliphatic polyester obtained through a polymerization reaction using 50 mol% or more of a monomer component(s) which is an object. The use amount of the monomer component(s) which is an object is preferably 60 mol% or more, more preferably 70 mol% or more, and still more preferably 80 mol% or more.

<Aliphatic polyester composed of, as main components, an aliphatic diol and an aliphatic dicarboxylic acid>

The aliphatic polyester composed of, as main components, an aliphatic diol and an aliphatic dicarboxylic acid is an aliphatic polyester resin including an aliphatic diol unit represented by the following formula (1) and an aliphatic dicarboxylic acid unit represented by the following formula (2).

$$-O-R_{11}-O- \qquad (1)$$

In the formula (1), $R_{11}$ represents a divalent chain aliphatic hydrocarbon group which may have an oxygen atom in a chain thereof, and when copolymerized, $R_{11}$ is not limited to one kind.

$$-OC-R_{21}-CO- \qquad (2)$$

In the formula (2), $R_{21}$ represents a direct bond or a divalent chain aliphatic hydrocarbon group, and when copolymerized, $R_{21}$ is not limited to one kind.

Although the aliphatic diol which gives the diol unit of the formula (1) is not particularly limited, from the viewpoint of moldability or mechanical strength, an aliphatic diol having 2 to 10 carbon atoms is preferred, and an aliphatic diol having 4 to 6 carbon atoms is especially preferred. Specifically, examples thereof include ethylene glycol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, neopentyl glycol, diethylene glycol, polyethylene glycol, polypropylene glycol, polytetramethylene ether glycol, and the like. Above all, 1,4-butanediol is especially preferred. The above-described aliphatic diol may be used alone, or may be used in an arbitrary combination of two or more thereof in an arbitrary ratio.

Although the dicarboxylic acid component which gives the aliphatic dicarboxylic acid unit of the formula (2) is not particularly limited, an aliphatic dicarboxylic acid having 2 to 40 carbon atoms is preferred, and an aliphatic dicarboxylic acid having 4 to 10 carbon atoms is especially preferred. Specifically, examples thereof include succinic acid, adipic acid, suberic acid, sebacic acid, dodecane diacid, and the like. Above all, succinic acid, adipic acid, and sebacic acid are preferred, succinic acid and adipic acid are more preferred, and succinic acid is especially preferred. The above-described aliphatic dicarboxylic acid may be used alone, or may be used in an arbitrary combination of two or more thereof in an arbitrary ratio.

Specific examples of the aliphatic polyester composed of, as main components, an aliphatic diol and an aliphatic dicarboxylic acid include polybutylene succinate composed of 1,4-butanediol and succinic acid, polybutylene succinate adipate composed of 1,4-butanediol, adipic acid, and succinic acid, and the like.

In the case where the aliphatic dicarboxylic acid is succinic acid, when the amount of the succinic acid-derived structural unit is allowed to fall within a predetermined range, there is a tendency that after the wood board including the aliphatic polyester particle of the present invention is disposed into the soil, it is biodegraded together with the lignocellulose material and reduced with the soil.

The proportion of the succinic acid-derived structural unit in the whole of the aliphatic dicarboxylic acid units is typically 50 to 100 mol%, preferably 80 to 100 mol%, and more preferably 90 to 100 mol%.

In addition, in the case where the aliphatic dicarboxylic acid is succinic acid and adipic acid, when the amount of the succinic acid-derived and adipic acid-derived structural units is allowed to fall within a predetermined range, there is a tendency that not only it is possible to reveal appropriate biodegradability under a usual condition, but also it becomes easier to impart impact resistance to the wood board. The proportion of the succinic acid-derived structural unit in the whole of the aliphatic dicarboxylic acid units is typically 50 to 95 mol%, preferably 60 to 93 mol%, and still more preferably 70 to 90 mol%. The proportion of the adipic acid-derived structural unit in the whole of the aliphatic dicarboxylic acid units is typically 5 to 50 mol%, preferably 7 to 40 mol%, and more preferably 10 to 30 mol%.

The aliphatic polyester composed of, as main components, a diol and a dicarboxylic acid may be produced by a known method (methods described in JP-A-2012-144744, JP-A-2010-195989, JP-A-2009-173884, and so on).

For example, the foregoing aliphatic polyester may be produced by a general method of melt polymerization, in which after performing an esterification reaction and/or an ester interchange reaction of the above-described aliphatic dicarboxylic acid and aliphatic diol, a polycondensation reaction is performed under reduced pressure; or a known solution heating dehydration condensation method using an organic solvent. From the viewpoint of profitability and simplicity of the production process, a method of performing the production by melt polymerization which is performed in the absence of a solvent is preferred.

Examples of products (commercially available products) which are usable as the aliphatic polyester composed of, as main components, a diol and a dicarboxylic acid include a polybutylene succinate resin "GS Pla" (registered trademark), manufactured by Mitsubishi Chemical Corporation (e.g., polybutylene succinate, polybutylene succinate adipate, *etc.*); a polybutylene succinate resin "Bionolle" (registered trademark), manufactured by Showa Denko K.K.; a polybutylene succinate resin, manufactured by Shandong Fuwin New Material Co., Ltd.; and the like.

As for the aliphatic polyester composed of, as main components, an aliphatic diol and an aliphatic dicarboxylic acid, those having the following physical properties are preferred.

As for the weight average molecular weight, a lower limit thereof is 10,000 or more, more preferably 20,000 or more, and still more preferably 50,000 or more; and an upper limit thereof is preferably 1,000,000 or less, more preferably 500,000 or less, and still more preferably 400,000 or less. When the weight average molecular weight is allowed to fall within the above-described range, such is advantageous from the standpoints of moldability and mechanical strength. In the present specification, the weight average molecular weight is a value measured by gel permeation chromatography (GPC) using polystyrene as a standard substance.

As for the melt flow rate (MFR), in the case of performing the measurement at 190°C under a load of 2.16 kg, a lower limit thereof is typically 0.1 g/10 min or more, preferably 0.5 g/10 min or more, and more preferably 1 g/10 min; and an upper limit thereof is typically 1,000 g/10 min or less, preferably 500 g/10 min, more preferably 100 g/10 min or less, and still more preferably 50 g/10 min. When the melt flow rate of the aliphatic polyester is allowed to fall within the above-described range, the moldability and mechanical strength become good.

As for the melting point, a lower limit thereof is preferably 70°C or higher, and more preferably 75°C or higher; and an upper limit thereof is preferably 250°C or lower, more preferably 200°C or lower, and especially preferably 150°C or lower. In the case where a plurality of melting points are present, it is preferred that at least one melting point falls within the above-described range.

The intrinsic viscosity (IV) is typically 0.6 or more, preferably 0.8 or more, and more preferably 1.0 or more, and an upper limit thereof is typically 1.8 or less, preferably 1.6 or less, and more preferably 1.4 or less. When the intrinsic viscosity is excessively small, there is a possibility that the mechanical physical properties of the molded article are worsened; whereas when the intrinsic viscosity is excessively large, the melt viscosity at the time of molding processing becomes excessively high, and an extruder load increases, so that there is a possibility that the productivity is decreased. In the present specification, the intrinsic viscosity (IV) is based on a value measured at 30°C by using a mixed solvent of phenol/tetrachloroethane (weight ratio: 1/1).

In addition, the physical properties of the aliphatic polyester resin serving as the raw material are the same as the physical properties described in the section of <Aliphatic polyester composed of, as main components, an aliphatic diol and an aliphatic dicarboxylic acid>, unless exceptionally described.

Although the amount of the aliphatic polyester resin composed of, as main components, an aliphatic diol and an aliphatic dicarboxylic acid in the aliphatic polyester resin is not particularly limited, it is typically 50% by weight or more, preferably 70% by weight or more, more preferably 80% by weight or more, still more preferably 90% by weight or more, and especially preferably 96% by weight or more; whereas though an upper limit thereof is not particularly limited, it is preferably 100% by weight. In the aliphatic polyester resin, when the aliphatic polyester resin composed of, as main components, an aliphatic diol and an aliphatic dicarboxylic acid is included within the above-described range, there is a tendency that the mechanical physical properties of the wood board including the aliphatic polyester particle of the present invention are enhanced.

<Aliphatic polyester composed of, as a main component, an oxycarboxylic acid>

The aliphatic polyester composed of, as a main component, an oxycarboxylic acid is an aliphatic polyester including at least one aliphatic oxycarboxylic acid unit.

Specific examples of the aliphatic oxycarboxylic acid which gives the aliphatic oxycarboxylic acid unit include lactic acid, glycolic acid, 2-hydroxy-n-butyric acid, 3-hydroxybutyric acid, 4-hydroxybutyric acid, 2-hydroxycaproic acid, 6-hydroxycaproic acid, 2-hydroxy-3,3-dimethylbutyric acid, 2-hydroxy-3-methylbutyric acid, 2-hydroxyisocaproic acid, 3-hydroxyvaleric acid, malic acid, citric acid, and lower alkyl esters or intramolecular esters thereof. In addition, lactone compounds, such as ε-caprolactone, *etc.,* are also encompassed in the aliphatic oxycarboxylic acid in the present invention. In the case where optical isomers are present in such compounds, any of D-isomers, L-isomers, or racemates may be adopted, and the mode may be any of a solid, a liquid, or an aqueous solution. Of these, lactic acid, glycolic acid, 3-hydroxybutyric acid, 4-hydroxybutyric acid, 6-hydroxycaproic acid, and 3-hydroxyvaleric acid are preferred. These aliphatic oxycarboxylic acids may be used alone, or may be used in an arbitrary combination of two or more thereof in an arbitrary ratio.

Specific examples of the aliphatic polyester composed of, as a main component, an oxycarboxylic acid include polylactic acid, polyglycolic acid, poly-3-hydroxybutyrate, poly-4-hydroxybutyrate, poly(3-hydroxybutyrate-co-3-hydroxyvalerate), polycaprolactone, and the like. Of these, polylactic acid is especially preferred.

As for the constitution of lactic acid which is included in the polylactic acid resin, its molar ratio is preferably 100/0 to 85/15 or 0/100 to 15/85 in terms of a (D-lactic acid)/(L-lactic acid) ratio. In addition, it is also possible to blend other polylactic acid in which a constitutional proportion of the D-lactic acid to the L-lactic acid is different. A polylactic acid resin composed of, as a structural unit, D-lactic acid only or L-lactic acid only becomes a crystalline resin and tends to be high in a melting point and excellent in heat resistance and mechanical physical properties.

Furthermore, the polylactic acid resin may also be a copolymer of the above-described polylactic acid and other hydroxycarboxylic acid unit, and may also include a small amount of a chain extender residual group. Examples of the other hydroxycarboxylic acid unit include bifunctional aliphatic hydroxycarboxylic acids, such as an optical isomer of lactic acid (D-lactic acid against L-lactic acid and L-lactic acid against D-lactic acid, respectively), glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, 2-hydroxycaproic acid, *etc.;* and lactones, such as caprolactone, butyrolactone, valerolactone, *etc.* It is suitable to use such other hydroxycarboxylic acid unit in an amount of less than 15 mol% in the polylactic acid resin.

The aliphatic polyester composed of, as a main component, an oxycarboxylic acid, for example, a polylactic acid resin, may be produced by a known method, such as a condensation polymerization method, a ring-opening polymerization method, *etc.* (methods described in JP-A-9-151244, JP-A-8-12750, WO00/078839, and so on). For example, according to the condensation polymerization method, a polylactic acid resin having arbitrary composition and crystallinity may be obtained by subjecting L-lactic acid or D-lactic acid, or a mixture thereof, or the like to direct dehydration condensation polymerization. In addition, according to the ring-opening polymerization method (lactidation method), a polylactic acid resin may be obtained from a lactide that is a cyclic dimer of lactic acid by using an appropriate catalyst with using a polymerization regulator or the like, if desired. The lactide is L-lactide that is a dimer of L-lactic acid, D-lactide that is a dimer of D-lactic acid, or DL-lactide that is a dimer of D-lactic acid and L-lactic acid, and a polylactic acid resin having arbitrary composition and crystallinity may be obtained by mixing these compounds and polymerizing the mixture, if desired.

Examples of products (commercially available products) which are usable as the aliphatic polyester composed of, as a main component, an oxycarboxylic acid include a polylactic acid resin "Ingeo" (registered trademark), manufactured by Nature Works LLC, and the like.

As for the weight average molecular weight of the polylactic resin which may be used in the present invention, a lower limit thereof is preferably 60,000 or more, more preferably 80,000 or more, and especially preferably 100,000 or more; and an upper limit thereof is 700,000 or less, more preferably 400,000 or less, and especially preferably 300,000 or less. When the weight average molecular weight is less than 60,000, practical physical properties, such as mechanical physical properties, heat resistance, *etc.,* are liable to be inferior, whereas when it is more than 700,000, the melt viscosity is too high, so that the molding processability is liable to be inferior.

As for the content proportion of the aliphatic polyester composed of, as a main component, an oxycarboxylic acid in the aliphatic polyester resin, when the whole of the aliphatic polyester resin is defined as 100 parts by weight, an upper limit thereof is preferably 90 parts by weight or less, more preferably 80 parts by weight or less, and still more preferably 70 parts by weight or less. Although a lower limit thereof is not particularly limited, the foregoing aliphatic polyester may not be contained; but in the case where it is contained, the lower limit is typically 0.1 parts by weight or more. When the content proportion is allowed to fall within the above-described range, there may be a case where hydrolyzability is enhanced.

<Aliphatic-aromatic polyester composed of, as main components, a diol and a dicarboxylic acid>

The aliphatic-aromatic polyester composed of, as main components, a diol and a dicarboxylic acid (herein sometimes referred to as "aliphatic-aromatic polyester") is one including, as essential components, an aliphatic diol unit represented by the following formula (3), an aliphatic dicarboxylic acid unit represented by the following formula (4), and an aromatic dicarboxylic acid unit represented by the following formula (5). The aliphatic-aromatic polyester may further include an oxycarboxylic acid unit.

$$-O-R_{31}-O- \qquad (3)$$

In the formula (3), $R_{31}$ represents a divalent chain aliphatic hydrocarbon group which may have an oxygen atom in a chain thereof, and when copolymerized, $R_{31}$ is not limited to one kind.

$$-OC-R_{41}-CO- \qquad (4)$$

In the formula (4), $R_{41}$ represents a direct bond or a divalent chain aliphatic hydrocarbon group, and when copolymerized, $R_{41}$ is not limited to one kind.

$$-OC-R_{51}-CO- \qquad (5)$$

In the formula (5), $R_{51}$ represents a divalent aromatic hydrocarbon group, and when copolymerized, $R_{51}$ is not limited to one kind.

Although the aliphatic diol which gives the diol unit of the formula (3) is not particularly limited, from the viewpoint of moldability or mechanical strength, an aliphatic diol having 2 to 10 carbon atoms is preferred, and an aliphatic diol having 4 to 6 carbon atoms is especially preferred. Specifically, examples thereof include the aliphatic diols exemplified as the foregoing formula (1), and above all, 1,4-butanediol is especially preferred. The above-described diol may be used alone, or may be used in an arbitrary combination of two or more thereof in an arbitrary ratio.

Although the aliphatic dicarboxylic acid component which gives the aliphatic dicarboxylic acid unit of the formula (4) is not particularly limited, an aliphatic dicarboxylic acid having 2 to 40 carbon atoms is preferred, and an aliphatic dicarboxylic acid having 4 to 10 carbon atoms is especially preferred. Specifically, examples thereof include succinic acid, adipic acid, suberic acid, sebacic acid, dodecane diacid, and the like. Above all, succinic acid, adipic acid, and sebacic acid are preferred, succinic acid and adipic acid are more preferred, and succinic acid is especially preferred. The above-described aliphatic dicarboxylic acid may be used alone, or may be used in an arbitrary combination of two or more thereof in an arbitrary ratio.

Although the aromatic dicarboxylic acid component which gives the aromatic dicarboxylic acid unit of the formula (5) is not particularly limited, examples thereof include terephthalic acid, isophthalic acid, naphthalenedicarboxylic acid, diphenyldicarboxylic acid, and the like. These may also be an acid anhydride. In addition, examples of derivatives of the aromatic dicarboxylic acid include lower alkyl esters of these aromatic dicarboxylic acids, and the like. Of these, terephthalic acid, isophthalic acid, and lower alkyl (for example, an alkyl having 1 to 4 carbon atoms) ester derivatives thereof are preferred. These compounds may be used alone, or may be used in admixture of two or more thereof.

In particular, terephthalic acid and/or a methyl ester of terephthalic acid, or a mixture containing terephthalic acid and/or a methyl ester of terephthalic acid and isophthalic acid and/or a methyl ester of isophthalic acid is preferred.

As specific examples of the aliphatic-aromatic polyester, a polybutylene alkylate terephthalate is preferred, polybutylene adipate terephthalate or polybutylene succinate terephthalate is more preferred, and polybutylene adipate terephthalate is especially preferred.

The aliphatic-aromatic polyester may be produced by a known method (methods described in JP-A-2008-31457, JP-A-2008-31456, JP-A-2001-26643, and so on). For example, the aliphatic-aromatic polyester may also be produced by a general method of melt polymerization, in which after performing an esterification reaction and/or an ester interchange reaction of the above-described aliphatic dicarboxylic acid, aromatic dicarboxylic acid, and aliphatic diol, a polycondensation reaction is performed under reduced pressure; or a known solution heating dehydration condensation method using an organic solvent. From the viewpoint of profitability and simplicity of the production process, a method of performing the production by melt polymerization which is performed in the absence of a solvent is preferred.

Examples of products (commercially available products) which are usable as the aliphatic-aromatic polyester include a polybutylene terephthalate adipate resin "ECOFLEX" (registered trademark), manufactured by BASF SE, and the like.

As for the content proportion of the aliphatic-aromatic polyester in the aliphatic polyester resin, when the whole of the aliphatic polyester resin is defined as 100 parts by weight, an upper limit thereof is preferably 100 parts by weight or less, more preferably 50 parts by weight or less, and especially preferably 30 parts by weight or less.

<Other additives>

The aliphatic polyester resin which is used in the present invention may also be a composition including a resin other than the aliphatic polyester or various additives within a range where effects of the present invention are not impaired. Examples of the additive include a filler, a heat stabilizer, an antioxidant, a crystal nucleating agent, a flame retardant, an antistatic agent, a mold release agent, a UV absorber, and the like.

<Aliphatic polyester particle>

The aliphatic polyester particle of the present invention is composed of an aliphatic polyester resin and is a particle having an average particle diameter of 650 $\mu$m or less and a value of particle diameter distribution of 1.3 or more.

The average particle diameter as referred to in the present invention means a particle diameter (D50) at which when a cumulative distribution of total volume of the particle is determined under the following condition by using the following laser diffraction/scattering particle size analyzer, the cumulative distribution of volume becomes 50%.

In addition, the particle diameter distribution as referred to in the present invention is a value obtained by determining a cumulative distribution of total volume by the same measurement method as in the average particle diameter and substituting a particle diameter at which the cumulative distribution becomes 10% (D10), 50% (D50), and 90% (D90), respectively for the following formula (6) to perform calculation.

$$\text{Particle diameter distribution} = (D90 - D10)/D50 \qquad (6)$$

Device used: Microtrac MT3300EX II (manufactured by Nikkiso Co., Ltd.)

Pre-treatment: In a beaker, a sample and an aqueous solution containing a dispersant are added and then ultrasonically dispersed for 2 minutes, and this is provided as a sample liquid.

Number of measurement: 2 times
Particle permeability: Permeated
Particle refractive index: 1.60
Solvent: Water
Solvent refractive index: 1.333

The average particle diameter of the aliphatic polyester particle of the present invention is 650 $\mu$m or less, preferably 600 $\mu$m or less, more preferably 550 $\mu$m or less, still more preferably 500 $\mu$m or less, and especially preferably 400 $\mu$m or less; whereas although a lower limit thereof is not particularly limited, it is typically 5 $\mu$m or more, preferably 15 $\mu$m or more, more preferably 30 $\mu$m or more, and still more preferably 40 $\mu$m or more. When the average particle diameter of the polyester particle of the present invention is the above-described upper limit or less, the appearance of the resulting wood board becomes good, and the hygroscopic expansion properties are lowered. On the other hand, when the average particle diameter of the polyester particle of the present invention is the above-described lower limit or more, the polyester particle is readily uniformly diffused at the time of mixing with the lignocellulose material, and the mechanical physical properties of the resulting wood board are enhanced.

The particle diameter distribution of the aliphatic polyester particle of the present invention is 1.3 or more, preferably 1.35 or more, more preferably 1.4 or more, still more preferably 1.5 or more, and especially preferably 1.8 or more; whereas although an upper limit thereof is not particularly limited, it is typically 30 or less, preferably 10 or less, more preferably 6 or less, still more preferably 4 or less, yet still more preferably 3.1 or less, and especially preferably 3.0 or less.

When the average particle diameter of the polyester particle of the present invention falls within the above-described range, the polyester particle is uniformly diffused into the lignocellulose material, and not only the mechanical physical properties of the resulting wood board at the time of wetting are enhanced, but also the hygroscopic expansion properties thereof are lowered.

It is preferred that the aliphatic polyester particle of the present invention is a polyester particle from which particles of a fixed size or more have been removed by classifying equipment as described later.

Specifically, an aliphatic polyester particle having a classified particle diameter (maximum particle diameter on the finer powder side) of 1,500 $\mu$m or less is preferred. The classified particle diameter is more preferably 1,000 $\mu$m or less, and still more preferably 800 $\mu$m or less. When the classified particle diameter in the aliphatic polyester is excessively large, there is a tendency that poor appearance generated on the wood board surface, such as staining, coloration, *etc.,* is caused.

The classified particle diameter (maximum particle diameter on the finer powder side) as referred to in the present invention means a maximum particle diameter in the aliphatic polyester particle. Specifically, in the case where the aliphatic polyester particle is classified with a mesh, a value of an opening (standard dimension) of the mesh as prescribed in JIS-Z 8801-1 is the classified particle diameter.

In the aliphatic polyester particle of the present invention, although not only the average particle diameter is 650 $\mu$m or less, but also the value of the particle diameter distribution is 1.3 or more, from the viewpoints of mechanical physical properties and appearance of the resulting wood board, it is further preferred that the classified particle diameter is 1,500 $\mu$m or less.

It is preferred to have a prescribed classified particle diameter in addition to the particle diameter distribution.

In addition, as for the melting point of the aliphatic polyester particle of the present invention, an upper limit thereof is preferably 250°C or lower, more preferably 200°C or lower, and especially preferably 150°C or lower; and a lower limit thereof is preferably 70°C or higher, and more preferably 75°C or higher. When the melting point of the aliphatic polyester resin of the present invention falls within the above-described range, the polyester resin is melted at the time of heating and pressure molding, and the mechanical strength of the resulting wood board tends to be enhanced.

Although the reasons why by using the aliphatic polyester particle of the present invention for the raw material of the wood board, it is possible to produce a wood board which is excellent in flexural strength, peeling strength, resistance to hygroscopic expansion, and appearance in the dry-wet environment are not elucidated yet, the following may be conjectured.

Usually, it is known that a lignocellulose material has a large number of pores having a wide-ranging pore diameter. By using aliphatic polyester particle having a wide particle diameter distribution as prescribed in the present invention, a pore corresponding to the particle diameter of the aliphatic polyester particle is uniformly filled. It may be considered that on the occasion when the aliphatic polyester particle within the pore is melted in the subsequent heating and pressurizing process and then cooled for solidification, by fixing the structure of the lignocellulose material by means of spot gluing, a lowering of expansion or flexural strength due to water absorption of the wood board was suppressed.

In addition, it may be considered that an aliphatic polyester particle having a large average particle diameter is hardly filled in the pore of the lignocellulose material, and as a result, in the resulting wood board, a sufficient flexural strength was not obtained.

Furthermore, it may be considered that an aliphatic polyester particle having a large particle diameter was unevenly distributed on the surface side of the wood board due to a weight difference at the time of mixing (at the time of agitation) with the lignocellulose material and the adhesive, and became discolored due to heat at the time of heating and pressurizing process, thereby worsening the appearance of the wood board.

<Production method of aliphatic polyester particle>

The production method of the aliphatic polyester particle of the present invention may be performed using a known technology. However, examples thereof include a method of producing a particle directly by means of suspension polymerization or emulsion polymerization; a method of subjecting the polyester resin to crushing processing; a method of introducing the polyester resin together with an emulsifier and a dispersion medium into a mixing machine to produce an emulsion solution; and the like. In addition, on the occasion of producing a particle by the above-described method, the average particle diameter, the particle diameter distribution, and the classified particle diameter of the polyester particle obtained by allowing the polyester particle after crushing to pass through classification equipment, such as a mesh, *etc.,* may be controlled.

In view of the fact that when the emulsifier or polymerization initiator or the like remains in the resulting aliphatic polyester particle, there is a concern that an unexpected chemical reaction with the adhesive is generated at the time of wood board production, a method of subjecting the aliphatic polyester resin to crushing processing is preferably adopted.

The crushing processing which is adopted in the present invention may be performed using a known technology. Preferred specific examples of the crushing processing include various crushers, such as a linrex mill, a pin mill, a disc mill, a ball mill, a turbo mill, *etc.*

The linrex mill refers to a mill composed of a liner having a large number of sharp-edged parts fixed onto the outer periphery of the mill and a plate having plural blades. Usually, a rotation axis of the plate is installed in the center of the linrex mill. By applying an impact between the blades fixed to the plate and the liner, the aliphatic polyester resin is crushed. Here, the size of the linrex mill, the size of the plate, the rotation number of the plate, the number of blades to be fixed to the plate, and so on are suitably selected. Examples of the linrex mill include LX Series, manufactured by Hosokawa Micron Corporation.

The pin mill refers to a mill having therein a pair of disc-shaped discs in which a large number of pins are fused and fixed. By rotating the pair of discs in the opposite directions to each other, or rotating one of the discs while immobilizing the other disc, the aliphatic polyester resin is crushed between the discs, thereby obtaining a powder for powder molding. Here, the size of the pin mill, the size of discs, the rotation number of the discs, the number of pins to be fused with and fixed to the discs, the distance between the discs, and so on are suitably selected.

The disc mill refers to a mill having therein a pair of disc-shaped discs having a large number of sharp-edged parts (blades). By rotating the pair of discs in the opposite directions to each other, or rotating one of the discs while immobilizing the other disc, the aliphatic polyester resin is crushed between the discs, whereby a powder for powder molding may be obtained. Here, the size of the disc mill, the size of the discs, the rotation number of the discs, the number of the sharp-edged parts (blades) on the discs, the distance between the discs, and so on are suitably selected.

The ball mill refers to a crusher for crushing the aliphatic polyester resin by putting balls and pellets into a drum lined with an abrasion-resistant material and rotating the drum.

By classifying a crushed material crushed by the above-described mill, a polyester particle controlled to a desired particle size may also be produced. For example, in the case where a lot of crushed materials having an excessively large particle size are formed, a method in which after classification with a classification mechanism, such as a sieve shaker, *etc.,* only a thoroughly finely pulverized powder is sorted may also be jointly adopted. The crushed materials having an excessively large particle size may also be again put into the above-described mill and then combined for use.

In addition, for the purpose of preventing melting of the resin at the time of crushing, a method of cooling a raw material tank or a crusher with a refrigerant, such as liquefied nitrogen, *etc.,* and a crushing method under a wet condition under which water is added are also preferably adopted.

The aliphatic polyester resin is liable to cause melting and softening of the resin due to shear heating, and therefore, it is preferred to crush the aliphatic polyester resin with a freeze-crushing apparatus. As the above-described freeze-crushing apparatus, an apparatus provided with a cooling part with an ultra-low temperature refrigerant, such as liquefied nitrogen, *etc.,* a crushing part, and a particle size regulating part (classification apparatus) is more preferred, and for example, Linrex Mill LX (trade name), manufactured by Hosokawa Micron Corporation is preferably used.

The temperature of the crusher in the case of performing the freeze crushing is typically a glass transition temperature of the aliphatic polyester resin or lower, preferably - 20°C or lower, more preferably -40°C or lower, and still more preferably -60°C or lower; whereas a lower limit thereof is typically -200°C or higher, preferably -195°C or higher, more preferably -180°C or higher, and still more preferably -150°C or higher. When the crushing is performed within the above-described temperature range, since the aliphatic polyester is crushed in a state of low-temperature embrittlement, the heat generation at the time of crushing is suppressed, and thermal unfolding is hardly generated. Thus, there is a tendency that coagulation by heat is suppressed, and the aliphatic polyester may be finely crushed.

<Lignocellulose material>

As the lignocellulose material, all of lignocellulose materials which are generally used for conventional wood boards may be suitably used. Examples thereof may include vegetable materials derived from wood materials (conifers and broad-leaved trees), such as Japanese cedar, Japanese cypress, beech, oak, *etc.;* plant materials, such as kenaf, sisal hemp, rice, sugar cane, bamboo, Oriental paper bush, paper mulberry, *etc.*; and seed hair fibers, such as cotton, bombax, kapok, *etc.* In addition, treated products or derivatives of these materials, so-called nanofiber celluloses, regenerated fibers (viscose), semi-synthetic fibers (cellulose esters), and so on are also usable. The above-described wood material also encompasses lumbers from thinning, timber offcuts, barks, timber wastes, and waste materials formed by processing, such as sawdust, straw, pulp, bagasse of sugar cane, *etc.*

As for the lignocellulose material, wood materials, such as Japanese cedar, Japanese cypress, beech, oak, *etc.,* are preferably used from the standpoint of mechanical physical properties of the resulting wood board.

The shape of the lignocellulose material is not particularly limited, and a fiber form (e.g., a linear form, a filament form, a short fiber, a stable, a yarn), a chip form, a powder form (e.g., a particle, a powder, a granule), and so on are used. In addition, as the cellulose in a fiber form, those obtained by opening various waste cellulose products, such as a cardboard that is a pulp processed product produced from a lignocellulose material, newspaper, *etc.,* may also be used.

As a method of processing the shape of the lignocellulose material, a known method, such as a method in which the lignocellulose material having been subjected to veneer processing is cut into a form of half-split chopsticks by a rotary cutter, to form a stick; a method in which a log is cut by a rotary blade of flaker, to form a strand; a method in which a wood is crushed by rotating a roll having a knife installed on the surface of a single-screw crusher; a method by a twin-screw crusher, an impact crusher, or the like.

Although the water content of the lignocellulose material is not particularly limited, it is typically 20% by weight or less, preferably 15% by weight or less, and more preferably 10% by weight or less. In general, the lignocellulose material absorbs moisture in the air, and therefore, by heating for drying just before use for the raw material, or hermetically closing and storing after drying, the lignocellulose material may be regulated to the desired water content. When the water content of the lignocellulose material is excessively high, the flexural strength of the resulting wood board is liable to be lowered. The water content of the lignocellulose material may be determined in conformity with JIS A5905-2003.

<Adhesive>

As the adhesive, all of adhesives which are generally used for conventional wood boards may be suitably used. Examples thereof include an organic isocyanate adhesive, a phenol adhesive, a urea adhesive, a melamine adhesive, an epoxy adhesive, an acrylic adhesive, an organic isocyanate adhesive, a synthetic rubber adhesive, a vinyl acetate adhesive, and the like. From the standpoint of mechanical physical properties of the resulting wood board, an organic isocyanate adhesive, a phenol adhesive, a urea adhesive, and a melamine adhesive are preferred, and from the standpoint of recent raising environmental awareness, an organic isocyanate adhesive from which high adhesiveness is obtained with suppressing diffusion of formaldehyde is more preferred.

Examples of the organic isocyanate adhesive include an aliphatic polyisocyanate, an alicyclic polyisocyanate, an aromatic-aliphatic polyisocyanate, an aromatic polyisocyanate, and derivatives or modified products of these isocyanates, and the like.

Examples of the aliphatic polyisocyanate include the following:

aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, 2,6-diisocyanatomethyl caproate, *etc.;* and

aliphatic triisocyanates, such as lysine ester triisocyanate, 1,4,8-triisocyanatooctane, 1,6,11-triisocyanatoundecane, 1,8-diisocyanato-4-isocyanatomethyloctane, 1,3,6-triisocyanatohexane, 3,5,7-trimethyl-1,8-diisocyanato-5-isocyanatomethyloctane, *etc.*

Examples of the alicyclic polyisocyanate include the following:

alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (also referred to as isophorone diisocyanate), 4,4'-methylenebis(cyclohexyl isocyanate), methyl-2,4-cyclohexane diisocyanate, methyl-2,6-cyclohexane diisocyanate, 1,3- or 1,4-bis(isocyanatomethyl)cyclohexane (hereinafter also referred to as hydrogenated xylylene diisocyanate) or a mixture thereof, norbornane diisocyanate, *etc.;* and
alicyclic triisocyanates, such as 1,3,5-triisocyanatocyclohexane, 1,3,5-trimethylisocyanatocyclohexene, 2-(3-isocyanatopropyl)-2,5-di(isocyanatomethyl)-bicyclo(2,2,1)heptane, 2-(3-isocyanatopropyl)-2,6-di(isocyanatomethyl)-bicyclo(2,2,1)heptane, 3-(3-isocyanatopropyl)-2,5-di(isocyanatomethyl)-bicyclo(2,2,1)heptane, 5-(2-isocyanatoethy1)-2-isocyanatomethyl-3-(3-isocyanatopropyl)-bicyclo(2,2,1)heptane, 6-(2-isocyanatoethyl)-2-isocyanatomethyl-3-(3-isocyanatopropyl)-bicyclo(2,2,1)heptane, 5-(2-isocyanatoethyl)-2-isocyanatomethyl-2-(3-isocyanatopropyl)-bicyclo(2,2,1)heptane, 6-(2-isocyanatoethyl)-2-isocyanatomethyl-2-(3-isocyanatopropyl)-bicyclo(2,2,1)heptane, *etc.*

Examples of the aromatic-aliphatic polyisocyanate include the following:

aromatic-aliphatic diisocyanates, such as 1,3- or 1,4-xylylene diisocyanate or a mixture thereof, ω,ω'-diisocyanato-1,4-diethylbenzene, 1,3- or 1,4-bis(1-isocyanato-1-methylethyl)benzene (hereinafter also referred to as tetramethylxylylene diisocyanate) or a mixture thereof, *etc.;* and
aromatic-aliphatic triisocyanates, such as 1,3,5-triisocyanatomethylbenzene, *etc.*

Examples of the aromatic polyisocyanate include the following:

aromatic diisocyanates, such as m-phenylene diisocyanate, p-phenylene diisocyanate, 4,4'-diphenyl diisocyanate, 1,5-naphthalene diisocyanate, 2,4- or 4,4'-diphenylmethane diisocyanate (hereinafter also referred to as "MDI") or a mixture thereof, 2,4- or 2,6-tolylene diisocyanate (hereinafter referred to as "TDI") or a mixture thereof, 4,4'-toluidine diisocyanate, 4,4'-diphenyl ether diisocyanate, *etc.;*
aromatic triisocyanates, such as triphenylmethane-4,4',4"-triisocyanate, 1,3,5-triisocyanatobenzene, 2,4,6-triisocyanatotoluene, *etc.;* and
aromatic tetraisocyanates, such as 4,4'-diphenylmethane-2,2',5,5'-tetraisocyanate, *etc.*

In addition, examples of the derivatives of these polyisocyanates include the following:

the above-described polyisocyanate dimers, trimers, biurets, allophanates, carbodiimides, urethodiones, and oxadiazinetriones as well as polymethylenepolyphenyl polyisocyanate (hereinafter also referred to as crude MDI or polymeric MDI) and crude TDI.

Examples of the modified products of the above-described polyisocyanates include the following:

polyol modified products or polyamine modified products of isocyanates, obtained by allowing the above-described polyisocyanate or polyisocyanate derivative and a low-molecular weight polyol or a low-molecular weight polyamine to react with each other such that the isocyanate group remains, namely the proportion of the isocyanate group of the polyisocyanate or its derivative is in excess against the hydroxyl group of the low-molecular weight polyol or the amino group of the low-molecular weight polyamine.

Among the above-exemplified organic isocyanate materials, MDI and MDI derivatives are preferred, and from the standpoint of work environment or easiness of handling at the time of handling, polymeric MDI is preferred.

<Composition>

The composition of the present invention includes an aliphatic polyester particle, a lignocellulose material, and an adhesive. Although the use amount of each of the raw materials on the occasion of producing the composition is not particularly limited, the following ranges are preferred.

The content of the aliphatic polyester particle is typically 0.01 parts by weight or more, preferably 0.05 parts by weight or more, and more preferably 0.1 parts by weight or more, whereas an upper limit thereof is typically 18 parts by weight or less, preferably 10 parts by weight or less, and more preferably 5 parts by weight or less, based on 100 parts by weight of the sum total of the lignocellulose material, the aliphatic polyester particle, and the adhesive.

When the content of the aliphatic polyester particle in the composition is more than the above-described upper limit, there is a tendency that there are caused such problems that the mechanical strength of the resulting wood board is insufficient; that the heat resistance is lowered; that the moisture absorption resistance is lowered; that the strength of the wood board is lowered due to hydrolysis of the resin at the time of moisture absorption or water staining; that the appearance of the molded article is worsened due to bleeding of the resin or oligomer; and that in view of the fact that the use amount of the resin particle is large, and the use amount of the relatively inexpensive lignocellulose material is small, the material costs are high, so that the economy is impaired. On the other hand, when the content of the aliphatic polyester particle in the composition is less than the above-described lower limit, there is a tendency that the strength of the resulting wood board is insufficient.

In addition, the content of the adhesive is typically 0.1 parts by weight or more, preferably 0.2 parts by weight or more, and more preferably 0.3 parts by weight or more, whereas an upper limit thereof is typically 10 parts by weight or less, preferably 6 parts by weight or less, and more preferably 4 parts by weight or less, based on 100 parts by weight of the sum total of the lignocellulose material, the aliphatic polyester particle, and the adhesive.

When the content of the adhesive in the composition is more than the above-described upper limit, the adhesiveness becomes excessively high; even by using a mold release agent, the mold release characteristics become worse; and problems, such as embrittlement of the wood board due to excessive progress of the reaction, mold contamination due to an unreacted product, *etc.,* are liable to be caused. When the content of the adhesive in the composition is less than the above-described lower limit, there may be a case where an effect for enhancing the strength of the wood board due to the combined use of the adhesive may not be satisfactorily obtained.

The composition of the present invention may be used not only as a molding material for a single-layered wood board but also as a molding material for a wood board having a laminated structure of two or more layers. In the case of applying the composition of the present invention as a molding material for a wood board having a laminated structure, it may be applied as any of a surface layer, a core layer, or a back layer; however, on that occasion, it is preferred to suitably regulate the content proportion of the adhesive within the above-described preferred range according to required characteristics in each of the layers.

That is, in the case where it is necessary to contemplate to reduce the weight with securing the strength of the wood board, when the content of the adhesive in the composition for forming the surface layer is made more than the content of the adhesive in the composition for forming the core layer, for example, about 1.1 to 2.0 times by weight, the surface layer may be thoroughly cured, and a molded article having a high flexural strength may be obtained, and hence, such is preferred.

Meanwhile, in the case where importance is attached to the interlaminar peeling strength of the surface layer and the back layer against the core layer, when the content of the adhesive in the composition for forming the core layer is made more than the content of the adhesive in the composition for forming the surface layer or the back layer, for example, about 1.1 to 2.0 times by weight, even the core layer which heat is in general hard to reach may be thoroughly cured, and a molded article having a high peeling strength may be obtained, and hence, such is preferred.

Although the lignocellulose material, the adhesive, and the aliphatic polyester particle, each constituting the composition for forming each of the layers, may be different among the layers, in some case, from the standpoint of interlaminar peeling strength, it is preferred that these materials are identical among the layers.

In the composition of the present invention, with respect to the lignocellulose material, one kind thereof may be included, and two or more kinds thereof may also be included. Similarly, with respect to the aliphatic polyester particle, only one kind thereof may be included, and two or more kinds of the aliphatic polyester resins in which the diol unit or the dicarboxylic acid unit is different may also be included. Similarly, with respect to the adhesive, only one kind thereof may be included, and two or more kinds thereof may also be included.

Although the composition of the present invention includes, as essential components, the lignocellulose material, the adhesive, and the aliphatic polyester particle, if desired, it may contain other component than the lignocellulose material, the adhesive, and the aliphatic polyester particle. In addition, other resin than the aliphatic polyester particle may be included.

Preferred examples of the other component include polysaccharides. Examples of the polysaccharide include dextrin and starch. Specifically, examples of the starch include cornstarch, waxy cornstarch, high amylose cornstarch, wheat starch, rice starch, potato starch, sweet potato starch, tapioca starch, pea starch, and the like. Starch is preferably used from the standpoint of enhancement effects in mechanical physical properties and resistance to hygroscopic expansion of the resulting wood board as well as the matter that it hardly affects the appearance of the wood board.

As for the above-described polysaccharide, all of unmodified products and modified products are usable. The modified products are ones resulting from subjecting a polysaccharide to a modification method, such as chemical modification, physical modification, biological modification, *etc.* As the polysaccharide having been subjected to chemical modification, a polysaccharide resulting from subjecting a part or the whole of constituent units of a hydrocarbon (polysaccharide) to a chemical reaction, such as esterification, etherification, oxidation, reduction, coupling, dehydration, hydrolysis, dehydrogenation, halogenation, *etc.,* especially a polysaccharide resulting from subjecting a hydroxyl group to modification by an esterification or etherification reaction, is preferably used.

In addition, the polysaccharide having been subjected to physical modification is a polysaccharide resulting from changing a degree of crystallization of a polysaccharide, thereby changing its physical nature. In addition, the polysaccharide having been subjected to biological modification is a polysaccharide resulting from changing a chemical structure or the like with a living thing.

In general, the sum total of other components to be included is 0.1 to 30 parts by weight based on 100 parts by weight of the lignocellulose material.

Examples of the other component which may be contained in the composition of the present invention include, a flame retardant, a compatibilizer, a plasticizer, an antioxidant, a mold release agent, a light stabilizer, a weather stabilizer, a colorant, a pigment, a modifier, a drip preventing agent, an antistatic agent, a hydrolysis preventing agent, a filler, a reinforcing agent (e.g., glass fibers, carbon fibers, talc, clay, mica, glass flakes, milled glass, glass beads, crystalline silica, alumina, silicon nitride, aluminum nitride, boron nitride, *etc.*), and the like.

Although the mold release agent is not particularly limited, examples thereof include silicon, fluorine, carnauba wax, montan wax, paraffin, and polyethylene waxes, and the like. Of these, polyethylene and carnauba wax waxes are preferably used from the standpoint of secondary processability of the resulting composite material.

In the case where the composition of the present invention contains such other components, the content thereof is typically 10 parts by weight or less, preferably 5 parts by weight or less, more preferably 1 part by weight or less based on 100 parts by weight of the sum total of the lignocellulose material, the aliphatic polyester particle, and the adhesive.

In addition, in the case where the composition of the present invention includes other resin than the aliphatic polyester particle, examples of the other resin include conventionally known thermoplastic resins. Specifically, examples thereof include a polycarbonate resin, a polypropylene resin, a polyamide resin, a polyolefin resin, a polyester carbonate resin, a polyphenylene ether resin, a polyphenylene sulfide resin, a polysulfone resin, a polyether sulfone resin, a polyarylene resin, a polyether imide resin, a polyacetal resin, a polyvinyl acetal resin, a polyketone resin, a polyetherketone resin, a polyetheretherketone resin, a polyarylketone resin, a polyether nitrile resin, a liquid crystal resin, a polybenzimidazole resin, a polyparabanic acid resin; a vinyl polymer obtained through polymerization or copolymerization of at least one vinyl monomer selected from the group consisting of an aromatic alkenyl compound, a methacrylic acid ester, an acrylic acid ester, and a vinyl cyanide compound; and a copolymer resin, a diene-aromatic alkenyl compound copolymer resin, a vinyl cyanide-diene-aromatic alkenyl compound copolymer resin, an aromatic alkenyl compound-diene-vinyl cyanide-N-phenylmaleimide copolymer resin, a vinyl cyanide-(ethylene-diene-propylene (EPDM))-aromatic alkenyl compound copolymer resin, a polyolefin, a vinyl chloride resin, a chlorinated vinyl chloride resin; and the like. A plurality of these resins may be combined and used.

In the case where the composition of the present invention includes such other resin, the content thereof is preferably 10 parts by weight or less based on 100 parts by weight of the aliphatic polyester particle, and what the composition of the present invention does not include such other resin is preferred from the standpoint of surely obtaining the effects of the present invention.

Usually, the composition of the present invention is prepared as a hydrated composition. In that case, the water content of the composition of the present invention is typically 3 to 25% by weight, and especially preferably 5 to 20% by weight. When the water content is more than the above-described upper limit, a defect is liable to be generated in the molded article due to steam produced in a large quantity at the time of heat press molding; whereas when the content is small, the heat is not thoroughly transferred into the core layer, so that there is a tendency that a wood board having a satisfactory mechanical strength is not obtained. In the case where the composition of the present invention is applied as a material for molding a wood board having a laminated structure, it is preferred to suitably regulate the water content in the composition with respect to each of the materials for molding the surface layer, the core layer, and the back layer according to the required characteristics of each layer. Usually, it is preferred to regulate the water content in the composition to 5 to 10% by weight for the material for molding the core layer and 8 to 20% by weight for the material for molding the surface layer or back layer, respectively.

In the case of regulating the water content in the composition, the water content of the lignocellulose material may be regulated, and water may be added at the time of producing the composition.

What the composition of the present invention includes the aliphatic polyester particle having an average particle diameter of 650 μm or less and a value of particle size distribution of 1.3 or more and the organic isocyanate compound is preferred from the standpoints of mechanical strength and appearance of the resulting wood board, and what the composition further includes starch is more preferred from the standpoint of obtaining a wood board having flexural strength and resistance to hygroscopic expansion.

<Production method of composition>

Although the preparation method of the composition of the lignocellulose material, the aliphatic polyester particle, and the adhesive, and other components which are optionally used is not particularly limited so far as it is a known method, for example, agitation mixing, pump mixing, extrusion mixing, container rotation mixing, crush mixing, and so on may be adopted.

<Production method of wood board>

The wood board of the present invention is one resulting from molding of the composition of the present invention.
Although the molding method is not particularly limited, a method of performing press molding at a temperature of a softening temperature of the aliphatic polyester particle or higher is preferably adopted. The heating method is not particularly limited and may be suitably selected among high-frequency heating, heating by a contact heater, heating in an oven, and so on. For the purpose of inhibiting decomposition of the aliphatic polyester particle, a temperature that is the softening temperature of the aliphatic polyester particle or higher, but is lower as far as possible is preferred. In the case of subjecting the composition including the lignocellulose material, the adhesive, and the aliphatic polyester particle to heating and pressure molding, the temperature is preferably 260°C or lower. In the case of performing heating and pressure molding, when the temperature is higher than 260°C, there is a tendency that the mechanical strength of the produced wood board is not satisfactorily obtained due to thermal degradation of the lignocellulose material or thermal decomposition of the aliphatic polyester particle. Although the pressure or heating and pressurizing time at the time of heating and pressure molding may be suitably selected, in general, the pressure is about 1 to 15 MPa, and the heating and pressurizing time is about 1 to 10 minutes.
Although the pressure molding may be a known method, press molding is usually adopted. Although a condition of the press molding is not particularly limited, the pressure molding is preferably hot pressing because the aliphatic polyester resin and the lignocellulose material are uniformly melt bonded. In addition, a molding material (mat) obtained by subjecting the composition to temporary cast molding into a molding flask may be subjected to substantial molding with a hot press of the softening temperature of the aliphatic polyester particle or higher. In addition, the composition in a gathered state into a predetermined shape without particularly forming a temporary molded article may be heated at the softening temperature of the aliphatic polyester particle or higher and preliminarily subjected to compression or the like, followed by further performing press molding.

<Re: Wood board>

The wood board means one obtained by mixing the lignocellulose material, such as timber small pieces obtained from harvest losses at the time of lumbering, building disassembling materials, wood fibers, *etc.,* with the adhesive, followed by molding. In general, the wood board is produced by mixing the lignocellulose material with an adhesive, such as a phenol resin, a melamine resin, a urea resin, a urea-melamine condensation copolymerization resin, an isocyanate resin, *etc.,* followed by undergoing heating and pressure molding. Specifically, examples of the wood board include an oriented strand board, a particle board, a medium density fiberboard, and the like, and various standards, such as strength, kind of adhesive, diffusion rate of formaldehyde, flame retardancy, *etc.,* are determined according to the kind of wood board by JIS of Japanese Industrial Standards Committee. For reference, in the case of a particle board, various standards are set by JIS A5908 (1994).
The wood board according to the present invention is one including the lignocellulose material, the adhesive, and the aliphatic polyester particle in the raw material. The wood board according to the present invention is low in water absorbency and good in dimensional stability, and even when absorbing water or moisture, is few in lowering of the flexural strength, and therefore, it may be suitably used as construction members to be used for roof substrate, floor substrate, surface of wall, or the like, and residential facilities members, such as floor material, furniture member, kitchen goods, storage (closet), *etc.*

<Wood plastic composite>

The wood plastic composite means one obtained by using a lignocellulose material and a thermoplastic plastic as main raw materials, followed by complexation by a known plastic molding method. Usually, the wood plastic composite is produced by mixing a lignocellulose material, such as timber small pieces obtained from harvest losses at the time of lumbering, building disassembling materials, wood fibers, *etc.,* with a thermoplastic plastic, followed by performing a known plastic molding method, such as extrusion molding, injection molding, press molding, *etc.* In recent years, as the raw materials of the wood plastic composite, wood timber wastes and waste plastics are watched, and with respect to the wood plastic composite using such a recycle raw material, various standards are set by JIS A5741 (2012) of Japanese Industrial Standards Committee.

The wood plastic composite according to the present invention is one including the lignocellulose material and the aliphatic polyester particle as the raw materials, and in view of excellent mechanical physical properties and appropriate biodegradability, it is preferably used for a case of mobile phone, *etc.,* a collecting palette, a raising seedling pot, or the like. In addition, for an application in which durability and weather resistance of every sort are needed, but biodegradability is not needed, a wood plastic composite may also be provided by mixing the aliphatic polyester particle of the present invention with a thermoplastic plastic, such as a polyethylene terephthalate resin, a polycarbonate resin, a polypropylene resin, *etc.*

Although the content of the thermoplastic plastic in the wood plastic composite in the present invention is not particularly limited, it is preferred that the thermoplastic plastic is contained in an amount of more than 18% by weight relative to the sum total of the lignocellulose material and the thermoplastic plastic. Furthermore, the content of the aliphatic polyester particle in the thermoplastic plastic which is used for the wood plastic composite according to the present invention is typically 10% by weight or more, and preferably 30% by weight or more. When the content of the aliphatic polyester particle in the thermoplastic plastic which is used for the wood plastic composite falls within the above-described range, there is a tendency that a wood plastic composite which is excellent in durability, weather resistance, and mechanical strength is obtained.

EXAMPLES

Although the present invention is hereunder more specifically described on the basis of Examples, it should not be construed that the present invention is limited to these Examples.

[Average particle diameter and particle diameter distribution]

A cumulative distribution of total volume of the particle was determined using a laser diffraction/scattering particle size analyzer, and a particle diameter (D50) at which the cumulative distribution of volume became 50% was measured and defined as the average particle diameter.

In addition, as for the particle diameter distribution, the cumulative distribution of total volume was determined by the same measurement method as in the average particle diameter, and a particle diameter at which the cumulative distribution became 10% (D10), 50% (D50), and 90% (D90), respectively was substituted for the following formula (6) to perform calculation.

$$\text{Particle diameter distribution} = (\text{D90} - \text{D10})/\text{D50} \qquad (6)$$

Device used: Microtrac MT3300EX II (manufactured by Nikkiso Co., Ltd.)

Pre-treatment: In a beaker, a sample and an aqueous solution containing a dispersant are added and then ultrasonically dispersed for 2 minutes, and this is provided as a sample liquid.

Number of measurement: 2 times
Particle permeability: Permeated
Particle refractive index: 1.60
Solvent: Water
Solvent refractive index: 1.333

<Evaluation methods of wood board>

(1) Flexural strength

(1-1) Flexural strength in a normal state

A test piece having a width of 40 mm and a length of 275 mm was cut out from a molded sample, and a flexural strength test was performed at a spun of 200 mm and at a test rate of 10 mm/min. The results are expressed as a flexural strength.

(1-2) Flexural strength at the time of wetting

A test piece was cut out from a molded sample in the same method as in the foregoing (1-1). Subsequently, the test piece was dipped in warm water at 70±3°C for 2 hours and further dipped in water at normal temperature for one hour, and then measured in a wet state for the flexural strength in the same manner as in the foregoing (1-1).

(2) Peeling strength

A test piece of 50 mm square was cut out from a molded sample, the upper and lower surfaces thereof were fixed to a jig with a hot-melt adhesive, and a peeling test of the board was performed at a test rate of 2 mm/min. A value obtained by dividing the resulting strength at break by the area was defined as the peeling strength.

(3) Coefficient of hygroscopic expansion

A test piece of 50 mm square was cut out from a molded sample. A thickness (A0) of this test piece was measured, and the test piece was dipped in a depth of 3 cm beneath the surface of the water at 20°C for 24 hours. A thickness (A1) of the test piece was then again measured, and a difference in the thickness from the original test piece was expressed by % (= (A1 - A0)/A0 × 100). In view of the fact that when the above-described coefficient of water expansion is lower, the dimensional stability is excellent throughout the year, such is a preferred characteristic as the wood board.

(4) Appearance

When after preparing a board, the board was visually inspected 60 cm far from the surface, a sample in which staining, scratch, or incorporation of a foreign matter was confirmed was judged poor in the appearance, and otherwise was judged good in the appearance.

[Raw materials]

<Lignocellulose material>

Wood chip for particle board surface layer (water content: 3%) (building waste material: a mixed material of Japanese cedar, Japanese cypress, and so on)
Wood chip for particle board core layer (water content: 3%) (building waste material: a mixed material of Japanese cedar, Japanese cypress, and so on)

<Adhesive>

Aromatic diisocyanate derivative: Polymethylene polyphenyl polyisocyanate (polymeric MDI) (Cosmonate M-200, manufactured by Mitsui Chemicals, Inc.)

<Wax>

Paraffin wax (Selosol P-203, manufactured by Chukyo Yushi Co., Ltd.)

<Resin>

Resin 1: Polybutylene succinate (PBS) ("GS Pla", manufactured by Mitsubishi Chemical Corporation, grade: AZ71TN, melting point: 110°C, MFR: 22 g/10 min)
Resin 2: Polybutylene succinate (PBS) ("GS Pla", manufactured by Mitsubishi Chemical Corporation, grade: FZ71PN, melting point: 115°C, MFR: 22 g/10 min)
Resin 3: Polybutylene succinate (PBS) ("Bionolle", manufactured by Showa Denko K.K., grade: 1001, melting point: 115°C, MFR: 1.3 g/10 min)
Resin 4: Polybutylene succinate (PBS) (manufactured by Shandong Fuwin New Material Co., Ltd., MFR: 8.5 g/10 min)
Resin 5: Polybutylene succinate adipate (PBSA) ("GS Pla", manufactured by Mitsubishi Chemical Corporation, grade: FD92WN, melting point: 84°C, MFR: 4.0 g/10 min)

Resin 6: Polybutylene adipate terephthalate (PBST) ("Ecoflex", manufactured by BASF SE, melting point: 120°C, MFR: 3.0 g/10 min)

Resin 7: Polylactic acid (PLA) ("Ingeo", manufacture by Nature Works LLC, grade: 4060D)

<Starch>

Starch 1: Tapioca starch (manufactured by Eiamheng Tapioca Starch Industry Co., Ltd.)

Starch 2: Wheat flour starch (medium-strength flour, manufactured by Nisshin Oil Mills, Ltd.)

The melting point and MFR of the resin were measured by the following methods.

Melting point: Using a differential scanning calorimeter, 10 mg of a sample was heated and melted under a nitrogen gas stream at a flow rate of 50 mL/min and then cooled to 0°C at a rate of 10°C/min. Subsequently, the temperature was raised at a rate of 10°C/min, and on that occasion, a melt peak temperature was defined as the melting point.

MFR: The MFR was measured under a condition at 190°C with a load of 2.16 kg in conformity with JIS K7210.

<Production of polyester particle>

[Production Example 1]

The resin 1 was crushed at -60°C or lower with a freeze-crushing machine (Linrex Mill LX (registered trademark), manufactured by Hosokawa Micron Corporation) into which liquefied nitrogen was circulated, and then, the resulting particle was classified with a mesh having an opening of 850 $\mu$m, thereby producing an aliphatic polyester particle 1. The production condition and physical properties (average particle diameter and particle diameter distribution) of the resulting aliphatic polyester particle are shown in Table 1.

[Production Example 2]

The resin 1 was crushed with a disc mill (manufactured by PALLMANN) in which a crushing temperature was controlled at between 20 and 40°C, thereby producing an aliphatic polyester particle 2. The production condition and physical properties of the resulting aliphatic polyester particle are shown in Table 1.

[Production Examples 3 to 11, 13, and 15]

The production of each of aliphatic polyester particles was performed under a production condition shown in Table 1, thereby obtaining an aliphatic polyester particle having average particle diameter and particle diameter distribution shown in Table 1. With respect to Production Example 4, the crushing condition (time, rotation number of mill, *etc.*) is different from that in Production Example 1. The production condition and physical properties of the resulting aliphatic polyester particles are shown in Table 1.

[Production Examples 12 and 14]

The aliphatic polyester particle of Production Example 13 was sieved with a sieve shaker having sieves of 5 stages and classified into a particle A of less than 75 $\mu$m, a particle B of 75 $\mu$m or more and less than 180 $\mu$m, a particle C of 180 $\mu$m or more and less than 300 $\mu$m, a particle D of 300 $\mu$m or more and less than 500 $\mu$m, and a particle E of 500 $\mu$m or more and less than 700 $\mu$m, respectively.

The above-described particle A, particle B, particle C, particle D, and particle E were mixed in a volume ratio of 2/1/1/1/1, thereby producing a particle 12.

In addition, the above-described particle C was provided as a particle 14. Physical properties of the resulting aliphatic polyester particles are shown below.

Table 1

| | Aliphatic polyester particle | Production condition | | | Aliphatic polyester particle | |
|---|---|---|---|---|---|---|
| | | Kind of resin | Crushing method | Classification condition ($\mu$m) | Average particle diameter ($\mu$m) | Particle diameter distribution |
| Production Example 1 | Particle 1 | Resin 1 | Linrex mill | 850 | 296 | 2.26 |
| Production Example 2 | Particle 2 | Resin 1 | Disc mill | - | 352 | 1.28 |
| Production Example 3 | Particle 3 | Resin 1 | Linrex mill | 350 | 78 | 2.00 |
| Production Example 4 | Particle 4 | Resin 1 | Linrex mill | - | 671 | 2.20 |
| Production Example 5 | Particle 5 | Resin 2 | Linrex mill | 425 | 210 | 1.56 |
| Production Example 6 | Particle 6 | Resin 3 | Linrex mill | 425 | 200 | 1.62 |
| Production Example 7 | Particle 7 | Resin 4 | Linrex mill | 425 | 210 | 1.59 |
| Production Example 8 | Particle 8 | Resin 5 | Linrex mill | 425 | 50 | 1.65 |
| Production Example 9 | Particle 9 | Resin 6 | Linrex mill | 425 | 220 | 1.37 |
| Production Example 10 | Particle 10 | Resin 7 | Linrex mill | 425 | 150 | 1.38 |
| Production Example 11 | Particle 11 | Resin 2 | Linrex mill | 300 | 41 | 1.90 |
| Production Example 12 | Particle 12 | Resin 2 | - | - | 258 | 3.20 |
| Production Example 13 | Particle 13 | Resin 2 | Linrex mill | 1000 | 517 | 2.20 |
| Production Example 14 | Particle 14 | Resin 2 | - | - | 263 | 0.80 |
| Production Example 15 | Particle 15 | Resin 1 | Linrex mill | 1000 | 121 | 2.36 |

[Example 1]

To obtain a composition for surface layer, 1 part by weight of the aliphatic polyester particle 1 obtained in Production Example 1, 4 parts by weight of the polymethylene polyphenyl polyisocyanate, 95 parts by weight of the wood chip for surface layer, and 0.4 parts by weight of the paraffin wax were mixed. Water was added in such a manner that the water content of the resulting composition for surface layer was 14% by weight.

Subsequently, 1.2 parts by weight of the aliphatic polyester particle obtained in Production Example 1, 4.8 parts by weight of the polymethylene polyphenyl polyisocyanate, 94 parts by weight of the wood chip for core layer, and 0.3 parts by weight of the paraffin wax were mixed to obtain a composition for core layer. Water was added in such a manner that the water content of the resulting composition for core layer was 7% by weight.

The composition for surface layer, the composition for core layer, and the composition for surface layer were successively poured into a molding flask of 28 cm in length and 26 cm in width, thereby preparing a temporary molded article (mat). Subsequently, the molding flask was taken out, a spacer rod of 1.6 cm square was then installed on both sides of the mat, and the mat was subjected to heating and pressure press molding at a temperature of 210°C under a pressure of 30 kg/cm$^2$ (about 3 MPa) for a time of 3 minutes, thereby producing a wood board having a thickness of about 15 mm. A forming ratio (surface layer/core layer/surface layer) was set to 20/60/20 (% by weight). In addition, a density of the wood board was set to 700 kg/m$^3$.

With respect to the resulting wood board, the various evaluations were performed in conformity with JIS A5908:2003 (Items 5.1 and 6.5 to 6.8). The results are shown in Table 2.

[Comparative Example 1]

A wood board was produced under the same condition as in Example 1, except that the aliphatic polyester particle 2 obtained in Production Example 2 was used in place of the aliphatic polyester particle 1. With respect to the resulting wood board, the same evaluations as in Example 1 were performed. The results are shown in Table 2.

[Reference Example 1]

A wood board was produced under the same condition as in Example 1, except that the aliphatic polyester particle 1 was not used. With respect to the resulting wood board, the same evaluations as in Example 1 were performed. The results are shown in Table 2.

Table 2

| | Production condition | | | | | | | Evaluation results | | | | |
|---|---|---|---|---|---|---|---|---|---|---|---|---|
| | Aliphatic polyester particle | Concentration of adhesive for surface layer (wt%) | | | Concentration of adhesive for core layer (wt%) | | | Appearance | Flexural strength (MPa) | | Peeling strength (N/mm$^2$) | Coefficient of hygroscopic expansion (%) |
| | | Adhesive | Resin | Wax | Adhesive | Resin | Wax | | Normal state | Wet state | | |
| Reference Example 1 | - | 4.0 | 0 | 0.4 | 4.8 | 0 | 0.3 | Good | 13.7 | 5.8 | 0.5 | 9.2 |
| Example 1 | Particle 1 | 4.0 | 1.0 | 0.4 | 4.8 | 1.2 | 0.3 | Good | 16.6 | 7.9 | 0.7 | 7.5 |
| Comparative Example 1 | Particle 2 | 4.0 | 1.0 | 0.4 | 4.8 | 1.2 | 0.3 | Good | 14.6 | 7.9 | 0.6 | 9.2 |

[Examples 2 to 11, Comparative Examples 2 to 3, and Reference Example 2]

Wood boards were produced under the same condition as in Example 1, except that the kind of the aliphatic polyester particle and the amount of each of the adhesive and the wax were changed as shown in Table 3, and that the density of the wood board was set to 800 kg/m$^3$. With respect to the resulting wood boards, the same evaluations as in Example 1 were performed. The results are shown in Table 3.

Table 3

| | Aliphatic polyester particle | Concentration of adhesive for surface layer (wt%) | | | Concentration of adhesive for core layer (wt%) | | | Appearance | Flexural strength (MPa) | | Peeling strength (N/mm$^2$) | Coefficient of hygroscopic expansion (%) |
|---|---|---|---|---|---|---|---|---|---|---|---|---|
| | | Adhesive | Resin | Wax | Adhesive | Resin | Wax | | Normal state | Wet state | | |
| Reference Example 2 | - | 3.2 | 0 | 0 | 2.4 | 0 | 0 | Good | 16.1 | 5.8 | 0.6 | 38.2 |
| Example 2 | Particle 3 | 3.2 | 4.8 | 0 | 2.4 | 2.6 | 0 | Good | 24.3 | 11.7 | - | 15.6 |
| Comparative Example 2 | Particle 4 | 3.2 | 4.8 | 0 | 2.4 | 2.6 | 0 | Bad | 23.2 | 9.5 | - | 17.7 |
| Example 3 | Particle 5 | 3.2 | 4.8 | 0 | 2.4 | 3.6 | 0 | Good | 23.0 | 10.7 | 0.9 | 19.4 |
| Example 4 | Particle 6 | 3.2 | 4.8 | 0 | 2.4 | 3.6 | 0 | Good | 22.4 | 8.9 | 0.8 | 25.2 |
| Example 5 | Particle 7 | 3.2 | 4.8 | 0 | 2.4 | 3.6 | 0 | Good | 18.3 | 7.3 | 0.5 | 27.6 |
| Example 6 | Particle 8 | 3.2 | 4.8 | 0 | 2.4 | 3.6 | 0 | Good | 20.9 | 9.8 | 1.0 | 20.7 |
| Example 7 | Particle 9 | 3.2 | 4.8 | 0 | 2.4 | 3.6 | 0 | Good | 19.3 | 8.3 | 0.8 | 23.9 |
| Example 8 | Particle 10 | 3.2 | 4.8 | 0 | 2.4 | 3.6 | 0 | Good | 17.6 | 7.1 | 0.7 | 25.3 |
| Example 9 | Particle 11 | 3.2 | 4.8 | 0 | 2.4 | 3.6 | 0 | Good | 25.4 | 8.6 | 1.4 | 19 |
| Example 10 | Particle 12 | 3.2 | 4.8 | 0 | 2.4 | 3.6 | 0 | Good | 22.6 | 8.1 | 1.2 | 21 |
| Example 11 | Particle 13 | 3.2 | 4.8 | 0 | 2.4 | 3.6 | 0 | Good | 24.4 | 9.4 | 1.0 | 23 |
| Comparative Example 3 | Particle 14 | 3.2 | 4.8 | 0 | 2.4 | 3.6 | 0 | Good | 23.9 | 8.0 | 1.0 | 21 |

From the evaluation results of Example 1 and Comparative Example 1 as well as the evaluation results of Example 2 and Comparative Example 3, it was noted that the wood board including an aliphatic polyester particle having a particle diameter distribution as prescribed in the present invention has high flexural strength in a normal state, flexural strength at the time of wetting, and peeling strength and excellent resistance to hygroscopic expansion, as compared with the wood board including an aliphatic polyester particle having a narrow particle diameter distribution.

In addition, from the evaluation results of Example 2 and Comparative Example 2, it was noted that as compared with the wood board including a polyester particle as prescribed in the present invention, the wood board including an aliphatic polyester particle having a particle diameter distribution of the same degree but having a high average particle diameter is low in the flexural strength in a normal state, the flexural strength at the time of wetting, and the resistance to hygroscopic expansion, and furthermore, the resulting wood board causes coloration originated from the aliphatic polyester particle.

Furthermore, from the results shown in Examples 3 to 11, it was noted that by using the aliphatic polyester particle of the present invention as the raw material, it is possible to produce a wood board which is excellent in the flexural strength in a normal state, the flexural strength at the time of wetting, the peeling strength, and the resistance to hygroscopic expansion, regardless of the kind of the aliphatic polyester serving as the raw material.

[Examples 12 to 13 and Reference Example 3]

Wood boards were produced under the same condition as in Example 1, except that the kind of the aliphatic polyester particle and the amount of each of the starch, the adhesive, and the wax were changed as shown in Table 4; that the density of the wood board was set to 680 kg/m$^3$; and that the starch and the aliphatic polyester particle were added at the same time. With respect to the resulting wood boards, the same evaluations as in Example 1 were performed. The results are shown in Table 4.

Table 4

| | Aliphatic polyester particle | Starch | Production condition | | | | | | | | Evaluation results | | | | | |
| --- | --- | --- | --- | --- | --- | --- | --- | --- | --- | --- | --- | --- | --- | --- | --- | --- |
| | | | Concentration of adhesive for surface layer (wt%) | | | | Concentration of adhesive for core layer (wt%) | | | | Appearance | Flexural strength (MPa) | | Peeling strength (N/mm$^2$) | Coefficient of hygroscopic expansion (%) |
| | | | Adhesive | Resin | Starch | Wax | Adhesive | Resin | Starch | Wax | | Normal state | Wet state | | |
| Reference Example 3 | Particle 15 | - | 1.5 | 0.4 | 0.0 | 0.4 | 1.0 | 0.2 | 0.0 | 0.3 | Good | 9.9 | 2.7 | 0.32 | 33.7 |
| Example 12 | Particle 15 | Starch 1 | 1.5 | 0.4 | 3.0 | 0.4 | 1.0 | 0.2 | 4.0 | 0.3 | Good | 12.0 | 1.3 | 0.27 | 20.7 |
| Example 13 | Particle 15 | Starch 2 | 1.5 | 0.4 | 3.0 | 0.4 | 1.0 | 0.2 | 4.0 | 0.3 | Good | 10.9 | 2.0 | 0.34 | 21.7 |

From the evaluation results of Examples 12 to 13 and Reference Example 3, it was noted that by further including the starch in the wood board including an aliphatic polyester particle having a particle diameter distribution as prescribed in the present invention, not only the strength in a normal state is improved, but also the coefficient of hygroscopic expansion is lowered.

While the present invention has been described in detail and with reference to specific embodiments thereof, it will be apparent to one skilled in the art that various changes and modifications can be made therein without departing from the spirit and scope thereof. It is to be noted that the present application is based on a Japanese patent application filed on June 5, 2015 (Japanese Patent Application No. 2015-115275), the entireties of which are incorporated by reference.

**Claims**

1. An aliphatic polyester particle having an average particle diameter of 650 μm or less and a value of particle size distribution of 1.3 or more.

2. The aliphatic polyester particle according to claim 1, having a classified particle diameter of 1,500 μm or less.

3. The aliphatic polyester particle according to claim 1 or 2, having a melting point of 200°C or lower.

4. The aliphatic polyester particle according to any one of claims 1 to 3, comprising, as a main component, an aliphatic polyester resin having a diol unit and a dicarboxylic acid unit as main constituent units.

5. The aliphatic polyester particle according to claim 4, wherein the aliphatic polyester resin is polybutylene succinate.

6. The aliphatic polyester particle according to any one of claims 1 to 5, which is obtained by crushing an aliphatic polyester resin.

7. The aliphatic polyester particle according to claim 6, which is obtained by crushing at a glass transition temperature of the aliphatic polyester resin or lower.

8. The aliphatic polyester particle according to claim 6 or 7, which is obtained by crushing the aliphatic polyester resin, followed by classification.

9. A composition comprising the aliphatic polyester particle according to any one of claims 1 to 8, a lignocellulose material, and an adhesive.

10. The composition according to claim 9, further comprising a polysaccharide.

11. The composition according to claim 9 or 10, wherein the adhesive is an organic isocyanate compound.

12. A wood board obtained by molding the composition according to any one of claims 9 to 11.

13. A composition for wood plastic composite comprising the aliphatic polyester particle according to any one of claims 1 to 8 and a lignocellulose material.

14. A wood plastic material obtained by molding the composition for wood plastic composite according to claim 13.

## INTERNATIONAL SEARCH REPORT

| | International application No. |
|---|---|
| | PCT/JP2016/066679 |

**A. CLASSIFICATION OF SUBJECT MATTER**
*C08J3/12*(2006.01)i, *B27N3/04*(2006.01)i, *C08L67/00*(2006.01)i, *C08L97/02*
(2006.01)i, *B27N3/02*(2006.01)n, *C08L101/16*(2006.01)n

According to International Patent Classification (IPC) or to both national classification and IPC

**B. FIELDS SEARCHED**

Minimum documentation searched (classification system followed by classification symbols)
C08J3/12, B27N3/04, C08L67/00, C08L97/02, B27N3/02, C08L101/16

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X <br> A | WO 2012/029448 A1 (Kureha Corp.), <br> 08 March 2012 (08.03.2012), <br> claims; examples <br> (Family: none) | 1-4,6-8 <br> 5,9-14 |
| X <br> A | JP 2012-144511 A (Kureha Corp.), <br> 26 October 2012 (26.10.2012), <br> claims; paragraphs [0062] to [0063], [0078]; <br> examples <br> & US 2013/0072699 A1 <br> claims | 1-4,6-8 <br> 5,9-14 |
| X <br> A | JP 2004-10731 A (Kao Corp.), <br> 15 January 2004 (15.01.2004), <br> claims; paragraphs [0017], [0021], [0025], <br> [0027], [0031], [0039]; examples <br> (Family: none) | 12,14 <br> 1-11,13 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 August 2016 (17.08.16) | 30 August 2016 (30.08.16) |

| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |
|---|---|

Form PCT/ISA/210 (second sheet) (January 2015)

**INTERNATIONAL SEARCH REPORT**

International application No.

PCT/JP2016/066679

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 11-189761 A  (Mitsui Chemicals, Inc.),<br>13 July 1999 (13.07.1999),<br>claims; paragraphs [0001] to [0002]; examples<br>(Family: none) | 12,14<br>1-11,13 |
| A | JP 9-59358 A  (Unitika Ltd.),<br>04 March 1997 (04.03.1997),<br>(Family: none) | 1-14 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013014040 A
- US 20130324644 A
- JP 2006205644 A
- JP 2012144744 A
- JP 2010195989 A
- JP 2009173884 A
- JP 9151244 A
- JP 8012750 A
- WO 00078839 A
- JP 2008031457 A
- JP 2008031456 A
- JP 2001026643 A
- JP 2015115275 A